# FASCICULE DE BREVET EUROPEEN

(11) **EP 3 386 775 B1**
(45) Date de publication et mention de la délivrance du brevet: **13.11.2019**
(21) Numéro de dépôt: 16825453.0
(22) Date de dépôt: 06.12.2016
(51) Int. Cl.: B60C 11/04, B60C 11/03, B60C 11/12, B60C 11/00

(54) **BANDE DE ROULEMENT DE PNEUMATIQUE POUR VEHICULE LOURD DE TYPE GENIE CIVIL**
REIFENLAUFFLÄCHE FÜR EIN SCHWERES BAUFAHRZEUG
TIRE TREAD FOR A HEAVY CIVIL-ENGINEERING VEHICLE

(30) Priorité: 07.12.2015 FR 1561921
(43) Date de publication de la demande: 17.10.2018
(73) Titulaire: Compagnie Générale des Etablissements Michelin, 63000 Clermont-Ferrand (FR)
(72) Inventeur: BARBARIN, François, 63040 CLERMONT-FERRAND Cedex 9 (FR); DEMAZIERE, Guillaume, 63040 CLERMONT-FERRAND Cedex 9 (FR)
(74) Mandataire: Millanvois, Patrick Jacques Jean
(86) Numéro de dépôt international: PCT/FR2016/053221
(87) Numéro de publication internationale: WO 2017/098131

(56) Documents cités:
- EP-A1- 2 639 084
- EP-A2- 2 583 839
- WO-A1-2004/085175
- WO-A1-2015/114129
- JP-A- 2011 000 991
- JP-A- 2014 125 109

## Description

La présente invention a pour objet un pneumatique pour véhicule lourd de type génie civil, destiné à porter de lourdes charges et à rouler sur des sols irréguliers tels que ceux des mines. Cette invention concerne plus particulièrement la bande de roulement d'un tel pneumatique.

Dans le présent document, on désigne par :
- direction radiale : une direction perpendiculaire à l'axe de rotation du pneumatique, correspondant à la direction de l'épaisseur de la bande de roulement.
- direction axiale ou transversale : une direction parallèle à l'axe de rotation du pneumatique.
- direction circonférentielle ou longitudinale : une direction tangente à la circonférence du pneumatique, perpendiculaire à la fois à la direction axiale et à une direction radiale.
- plan équatorial: un plan perpendiculaire à l'axe de rotation du pneumatique divisant la bande de roulement dans sa largeur en deux moitiés d'égales largeurs.

La bande de roulement est la partie de pneumatique comprenant au moins un matériau élastomérique, destinée à entrer en contact avec un sol par l'intermédiaire d'une surface de roulement et à être usée.

Pour assurer une performance satisfaisante en adhérence longitudinale, en motricité et en freinage, et transversale, il est nécessaire de former dans la bande de roulement un système plus ou moins complexe de découpures séparant des éléments en relief, appelé sculpture.

Dans le présent document, une découpure désigne, de manière générique, soit une rainure soit une incision et correspond à l'espace délimité par des parois de matière se faisant face et distantes l'une de l'autre d'une distance dite "largeur de la découpure". Ce qui différencie une incision d'une rainure c'est précisément cette distance. Dans le cas d'une incision, cette distance est appropriée pour permettre la mise en contact au moins partielle des parois opposées délimitant ladite incision au moins lors du passage de la bande de roulement dans le contact avec le sol, lorsque le pneumatique est soumis à des conditions de charge et de pression nominales recommandées. Dans le cas d'une rainure, les parois de cette rainure ne peuvent pas venir en contact l'une avec l'autre dans des conditions normales de roulage.

Par définition, un élément en relief formé dans la bande de roulement, s'étendant dans la direction circonférentielle sur toute la circonférence du pneumatique, est appelée nervure ou rib. Une nervure comprend deux parois latérales et une face de contact, la face de contact étant une partie de la surface de roulement destinée à venir en contact avec le sol pendant le roulage. Une nervure est délimitée par deux découpures circonférentielles ou sillons circonférentiels, sauf si ladite nervure est une portion axialement extérieure de la bande de roulement, délimitée, dans ce cas, d'un seul côté par un sillon circonférentiel.

La bande de roulement comprend ainsi généralement des découpures réparties en sillons circonférentiels (ou longitudinaux), en rainures transversales (ou axiales) et en incisions transversales (ou axiales). Par sillon circonférentiel, on entend un sillon dont le profil moyen forme, avec la direction circonférentielle, un angle au plus égal à 45° : c'est un sillon dont le profil moyen a une direction globalement circonférentielle, c'est-à-dire dont l'inclinaison moyenne est plus proche de la direction circonférentielle que axiale. Par rainure ou incision transversale on entend une découpure dont le profil moyen forme, avec la direction circonférentielle, un angle au moins égal à 45° : c'est une découpure dont le profil moyen a une direction globalement axiale, c'est-à-dire dont l'inclinaison moyenne est plus proche de la direction axiale que circonférentielle . Ainsi une découpure transversale peut être strictement transversale, c'est-à-dire son profil moyen forme, avec la direction circonférentielle, un angle égal à 90°, ou sensiblement oblique, c'est-à-dire son profil moyen forme, avec la direction circonférentielle, un angle strictement inférieur à 90°.

La bande de roulement est généralement caractérisée géométriquement par une largeur axiale W_{T} et une épaisseur radiale H_{T}. La largeur axiale W_{T} est définie comme la largeur axiale de la surface de contact de la bande de roulement du pneumatique neuf avec un sol lisse, le pneumatique étant soumis à des conditions de pression et de charge telles que recommandées, par exemple, par la norme E.T.R.T.O. (European Tyre and Rim Technical Organization). L'épaisseur radiale H_{T} est définie, par convention, comme la profondeur radiale maximale mesurée dans les découpures, le plus souvent dans les sillons circonférentiels. Dans le cas d'un pneumatique pour véhicule lourd de type génie civil, et à titre d'exemple, la largeur axiale W_{T} est au moins égale à 600 mm et l'épaisseur radiale H_{T} est au moins égale à 70 mm.

Le plus souvent, la bande de roulement comprend au moins deux sillons circonférentiels, positionnés axialement de part et d'autre du plan équatorial. Chaque sillon circonférentiel s'étend axialement entre deux faces sensiblement circonférentielles, radialement vers l'intérieur à partir de la surface de roulement jusqu'à une face de fond et circonférentiellement sur toute la circonférence du pneumatique. Chaque sillon circonférentiel, axialement positionné, par rapport au plan équatorial, à une distance axiale L, a une profondeur radiale H, valeur moyenne sur toute la périphérie du pneumatique mesurée entre la surface de roulement et la face de fond, la profondeur radiale H étant au moins égale à 70% de l'épaisseur radiale H_{T} et au plus égale à l'épaisseur radiale H_{T}. Chaque sillon circonférentiel a également une largeur axiale W, valeur moyenne sur la profondeur radiale H de la distance mesurée entre les deux faces sensiblement circonférentielles du sillon circonférentiel.

Les conditions usuelles de roulage, en termes de pression, de charge et de vitesse, d'un pneumatique pour véhicule lourd de type génie civil, tel que, par exemple, un dumper destiné au transport de matériaux extraits de carrières ou de mines de surface, sont particulièrement sévères et génèrent le plus souvent des températures élevées dans le sommet du pneumatique. Le sommet du pneumatique comprend, radialement de l'extérieur vers l'intérieur, une bande de roulement et une armature de sommet. L'armature de sommet comprend elle-même le plus souvent, radialement de l'extérieur vers l'intérieur, au moins une armature de protection comprenant au moins une couche de protection et une armature de travail comprenant au moins deux couches de travail. Ces températures élevées, générées dans le sommet, peuvent générer des dégradations des composants du sommet et limiter son endurance, et par conséquent la durée de vie du pneumatique. La diminution du niveau thermique du sommet du pneumatique est une préoccupation constante du concepteur de pneumatique.

Les documents WO2015/114129A1, JP2011000991A et JP2014125109A montrent des pneus pour véhicules poids lourd.

Le document WO2004085175A1 montre un pneumatique pour véhicule lourd de type génie civil.

Les inventeurs se sont donnés pour objectif de concevoir une bande de roulement d'un pneumatique pour véhicule lourd de type génie civil, permettant de diminuer les températures générées dans le sommet du pneumatique et d'améliorer ainsi l'endurance du sommet du pneumatique.

Cet objectif a été atteint par un pneumatique pour véhicule lourd de type génie civil comprenant une bande de roulement, destinée à entrer en contact avec un sol par l'intermédiaire d'une surface de roulement :
- la bande de roulement ayant une largeur axiale W_{T} et ayant une épaisseur radiale H_{T} au moins égale à 70 mm,
- la bande de roulement comprenant au moins deux sillons circonférentiels, positionnés axialement de part et d'autre d'un plan équatorial passant par le milieu de la bande de roulement et perpendiculaire à l'axe de rotation du pneumatique,
- chaque sillon circonférentiel s'étendant axialement entre deux faces sensiblement circonférentielles, radialement vers l'intérieur à partir de la surface de roulement jusqu'à une face de fond et circonférentiellement sur toute la circonférence du pneumatique,
- chaque sillon circonférentiel étant axialement positionné par rapport au plan équatorial à une distance axiale L, ayant une largeur axiale W, mesurée entre les deux faces sensiblement circonférentielles, et une profondeur radiale H, mesurée entre la surface de roulement et la face de fond,
- chaque sillon circonférentiel ayant une largeur axiale W et une profondeur radiale H, de telle sorte que le rapport W/H est au moins égal à 0.06,
- la distance axiale C entre deux sillons circonférentiels consécutifs étant au moins égale à 12% et au plus égale à 21% de la largeur axiale W_{T} de la bande de roulement
- et chacun des sillons circonférentiels axialement les plus extérieurs étant positionné axialement, par rapport au plan équatorial, à une distance axiale L_{E} au moins égale à 35% de la largeur axiale W_{T} de la bande de roulement.

Selon une première caractéristique essentielle de l'invention, chaque sillon circonférentiel a une largeur axiale W et une profondeur radiale H, de telle sorte que le rapport W/H est au moins égal à 0.06. La largeur axiale W est la valeur moyenne des distances entre les faces sensiblement circonférentielles du sillon circonférentiel, calculée sur la profondeur radiale H du sillon circonférentiel. La profondeur radiale H est la valeur moyenne des distances entre la face de fond du sillon circonférentiel et la surface de roulement, calculée sur toute la circonférence du pneumatique. Cette caractéristique traduit le fait que chaque sillon circonférentiel doit être suffisamment large pour avoir une action significative sur le refroidissement de la portion de sommet à l'aplomb du sillon circonférentiel. Le volume de matière au-dessus du point chaud est ainsi minimisé et le volume du sillon garantit une ventilation efficace et de meilleurs échanges thermiques entre le sommet du pneumatique et l'air extérieur.

La deuxième caractéristique essentielle est que la distance axiale C entre deux sillons circonférentiels consécutifs est au moins égale à 12% et au plus égale à 21% de la largeur axiale W_{T} de la bande de roulement. La distance axiale C entre deux sillons circonférentiels consécutifs, appelée également pas axial des sillons circonférentiels, est mesurée entre les surfaces moyennes respectives des sillons circonférentiels. Cette caractéristique signifie qu'il doit y avoir un nombre suffisant de sillons circonférentiels pour garantir le refroidissement du sommet, mais un nombre pas trop élevé pour ne pas pénaliser le volume de matière à user.

Enfin, selon la troisième caractéristique essentielle, chacun des sillons circonférentiels axialement les plus extérieurs est positionné axialement, par rapport au plan équatorial, à une distance axiale L_{E} au moins égale à 35% de la largeur axiale W_{T} de la bande de roulement. Ceci implique que les sillons circonférentiels les plus axialement extérieurs sont axialement positionnés sensiblement à l'aplomb des extrémités des couches de travail. Ces zones sont en effet des points chauds particulièrement sensibles desquels peuvent partir des fissures susceptibles d'entraîner la déchéance mécanique du sommet.

En résumé, le principe de l'invention est d'avoir un nombre suffisant de sillons circonférentiels suffisamment larges et axialement positionnés à l'aplomb des points chauds du sommet, pour diminuer les températures au niveau de ces points chauds.

Avantageusement le rapport W/H est au plus égal à 0.15. Cette valeur maximale du rapport W/H garantit un volume de matière à user suffisant. De plus, elle autorise encore la fermeture du sillon circonférentiel au passage dans la surface de contact, ce qui garantit une bande de roulement suffisamment compacte et rigide pour la reprise des efforts transversaux appliqués sur le pneumatique.

Il est également avantageux que la distance axiale L_{E} soit au plus égale à 40% de la largeur axiale W_{T} de la bande de roulement. Cette distance maximale garantit la présence d'une portion latérale de bande de roulement suffisamment large, donc suffisamment résistante aux arrachements.

La distance axiale C entre deux sillons circonférentiels consécutifs est avantageusement au moins égale à 150% et au plus égale à 200% de l'épaisseur radiale H_{T}. Cette caractéristique traduit le fait que le nombre de sillons circonférentiels dépend également de la profondeur desdits sillons circonférentiels. Ainsi, le nombre de sillons doit être suffisant pour garantir le refroidissement, mais pas trop élevé pour avoir une rigidité suffisante des éléments en relief délimités par deux sillons circonférentiels consécutifs.

Selon une première variante de profil moyen circonférentiel, au moins un sillon circonférentiel a un profil moyen circonférentiel rectiligne. C'est la géométrie de profil moyen circonférentiel la plus simple.

Selon une deuxième variante de profil moyen circonférentiel, au moins un sillon circonférentiel a un profil moyen circonférentiel ondulé périodique. Un tel profil moyen circonférentiel ondulé est caractérisé par son amplitude A et sa période T. La présence d'ondulations limite la rétention de cailloux dans les sillons circonférentiels.

Selon une première variante de profil méridien, chaque face sensiblement circonférentielle d'un sillon circonférentiel forme, avec la direction radiale, un angle au moins égal à 0.5° et au plus égal à 5°. Par profil méridien, on entend un profil en coupe selon un plan normal au profil moyen circonférentiel, souvent proche d'un plan méridien. Les angles formés par chaque face sensiblement circonférentielle sont aussi usuellement appelés angles de dépouille. Ces angles de dépouilles limitent la rétention des cailloux par le sillon circonférentiel, en permettant l'éjection des cailloux.

Selon une deuxième variante de profil méridien, chaque face sensiblement circonférentielle d'un sillon circonférentiel est reliée à la face de fond du sillon circonférentiel par un raccordement circulaire de rayon R au moins égal à 0.25 fois la largeur axiale W. Cette plage de valeurs du rayon de raccordement des faces sensiblement circonférentielles en fond de sillon circonférentiel minimise le risque d'initiation de fissures dans cette zone sensible à la fissuration.

La bande de roulement comprend avantageusement au moins quatre sillons circonférentiels, de préférence au moins cinq sillons circonférentiels. Ce nombre minimal de sillons circonférentiels permet un compromis satisfaisant entre un refroidissement efficace et un volume de matière à user suffisant.

La bande de roulement comprend encore plus avantageusement au plus huit sillons circonférentiels. Au-delà de huit sillons circonférentiels, la bande de roulement est trop découpée, donc plus fragile mécaniquement et insuffisante en terme de volume de matière à user.

Selon un premier mode de réalisation préféré, la bande de roulement comprenant une portion médiane ayant une largeur axiale W_{C} au moins égale à 50% et au plus égale à 80% de la largeur axiale W_{T}, généralement mais pas nécessairement délimitée axialement par les deux sillons circonférentiels les plus axialement extérieurs, et deux portions latérales axialement positionnées respectivement de part et d'autre de la portion médiane et ayant chacune une largeur axiale Ws au moins égale à 10% et au plus égale à 25% de la largeur axiale W_{T}, la bande de roulement est telle que la portion médiane comprend des incisions transversales débouchant dans les sillons circonférentiels. Ces incisions transversales ont une profondeur radiale H1 au moins égale à 70% de l'épaisseur radiale H_{T} et délimitent des éléments en relief de hauteur égale à la profondeur radiale H1 desdites incisions et de longueur circonférentielle B1 égale à la distance moyenne entre deux incisions transversales consécutives. Avantageusement le rapport H1/B1 est au moins égal à 0.5 et au plus égal à 2.5.

Dans ce premier mode de réalisation préféré, les sillons circonférentiels selon l'invention précédemment décrites sont combinés avec des découpures transversales de type incision positionnées dans une portion médiane de la bande de roulement. Par convention, cette portion médiane a une largeur axiale W_{C} au moins égale à 50% et au plus égale à 80% de la largeur axiale W_{T} et est délimitée axialement par les deux sillons circonférentiels les plus axialement extérieurs. Les nervures circonférentielles de ladite portion médiane sont ainsi incisées sur toute la circonférence du pneumatique. Deux incisions consécutives délimitent un élément en relief ayant une hauteur radiale H1, correspondant à la profondeur radiale H1 des incisions, et une longueur circonférentielle B1, correspondant à la distance circonférentielle ou pas circonférentiel entre deux incisions consécutives.

La localisation de ces incisions dans la portion médiane de la bande de roulement est justifiée par le fait que cette portion médiane supporte la quasi-totalité de la charge appliquée sur le pneumatique, lorsque le véhicule sur lequel il est monté roule à vide. Ce principe d'incision de la portion médiane permet ainsi de diminuer l'usure du pneumatique, en particulier lors des phases de roulage du véhicule à vide. En outre, les arêtes de ces incisions transversales, c'est-à-dire l'intersection des faces des incisions avec la surface de roulement, contribuent à une meilleure adhérence longitudinale du pneumatique, aussi bien en motricité qu'en freinage.

Selon un deuxième mode de réalisation préféré, la bande de roulement comprenant une portion médiane ayant une largeur axiale W_{C} au moins égale à 50% et au plus égale à 80% de la largeur axiale W_{T}, généralement mais pas nécessairement délimitée axialement par les deux sillons circonférentiels les plus axialement extérieurs, et deux portions latérales axialement positionnées respectivement de part et d'autre de la portion médiane et ayant chacune une largeur axiale Ws au moins égale à 10% et au plus égale à 25% de la largeur axiale W_{T}, la bande de roulement est telle qu'au moins une portion latérale comprend des découpures transversales, de types incision transversale ou rainure transversale, débouchant d'un côté dans un sillon circonférentiel et de l'autre dans une extrémité axiale de la bande de roulement. Ces découpures transversales, de types incision transversale ou rainure transversale, ont une profondeur radiale H2 au moins égale à 70% de l'épaisseur radiale H_{T} et délimitent des éléments en relief de hauteur égale à la profondeur radiale H2 desdites découpures transversales et de longueur circonférentielle B2 égale à la distance moyenne entre deux découpures transversales consécutives. Avantageusement, pour tous les éléments en relief délimités par deux des découpures transversales consécutives d'au moins une portion latérale, le rapport H2/B2 est au moins égal à 0.5 et au plus égal à 2.5.

Dans ce deuxième mode de réalisation préféré, le principe des découpures transversales à un pas compris dans un intervalle donné est étendu à au moins une portion latérale, le plus souvent aux deux portions latérales de la bande de roulement, positionnées axialement de part et d'autre de la portion médiane. Chaque portion latérale a une largeur axiale W_{S} au moins égale à 10% et au plus égale à 25% de la largeur axiale W_{T}, cette largeur axiale W_{S} n'étant pas nécessairement identique pour chacune des portions latérales. En effet les portions latérales participent au port de la charge, avec la portion médiane, lorsque le véhicule roule en charge. Grâce aux découpures transversales de type incision transversale, cette variante permet donc de diminuer l'usure des parties latérales de la bande roulement, lors des phases de roulage en charge du véhicule. En outre, les arêtes de ces incisions transversales, c'est-à-dire l'intersection des faces des incisions avec la surface de roulement, contribuent à une meilleure adhérence longitudinale du pneumatique, aussi bien en motricité qu'en freinage. Grâce aux découpures transversales de type rainure transversale, cette variante permet de diminuer la température de parties latérales de la bande roulement et donc d'améliorer l'endurance thermique du sommet, lors des phases de roulage en charge du véhicule.

Selon une variante du deuxième mode de réalisation préféré, au moins une portion latérale comprend une alternance d'incisions transversales et de rainures transversales de telle sorte que tout élément en relief est délimité par une incision transversale et une rainure transversale consécutives. Préférentiellement, chaque portion latérale comprend une alternance d'incisions transversales et de rainures transversales.

Les caractéristiques de l'invention sont illustrées par les figures 1A, 1B, 2A, 2B, 2C et 3 schématiques et non représentées à l'échelle :
- figure 1A : vue de dessus d'une bande de roulement d'un pneumatique selon l'invention,
- figure 1B : coupe méridienne, selon un plan méridien YZ, d'une bande de roulement d'un pneumatique selon l'invention,
- figure 2A : vue de dessus d'un sillon circonférentiel d'une bande de roulement selon une première variante de profil moyen circonférentiel,
- figure 2B : vue de dessus d'un sillon circonférentiel d'une bande de roulement selon une deuxième variante de profil moyen circonférentiel,
- figure 2C : coupe méridienne d'un sillon circonférentiel d'une bande de roulement,
- figure 3 : vue de dessus d'une bande de roulement d'un pneumatique selon un mode de réalisation préféré des découpures transversales.

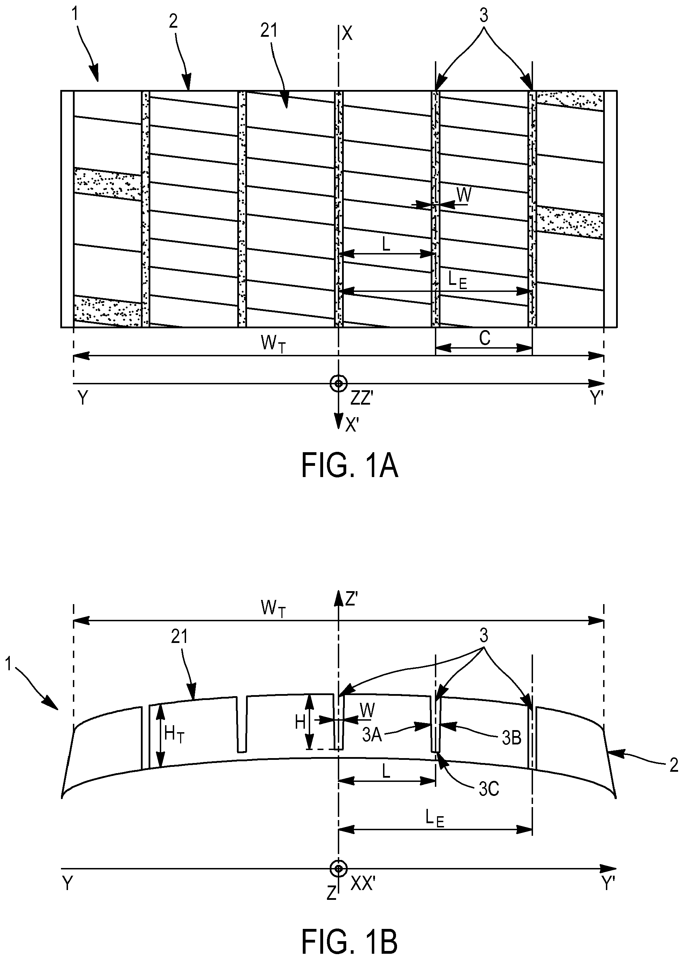

La figure 1A est une vue de dessus d'une bande de roulement 2 d'un pneumatique 1 selon l'invention. La bande de roulement 2, destinée à entrer en contact avec un sol par l'intermédiaire d'une surface de roulement 21, a une largeur axiale W_{T} et une épaisseur radiale H_{T} (non représentée) au moins égale à 70 mm. La bande de roulement 2, dans le cas représenté, comprend 5 sillons circonférentiels 3, positionnés axialement au niveau ou de part et d'autre d'un plan équatorial XZ passant par le milieu de la bande de roulement et perpendiculaire à l'axe de rotation YY' du pneumatique. Chaque sillon circonférentiel 3 est axialement positionné par rapport au plan équatorial XZ à une distance axiale L et a une largeur axiale W, selon l'axe YY', et une profondeur radiale H (non représentée), selon l'axe ZZ', la profondeur radiale H étant au moins égale à 70% de l'épaisseur radiale H_{T} et au plus égale à l'épaisseur radiale H_{T}. Selon l'invention, chaque sillon circonférentiel 3 a une largeur axiale W et une profondeur radiale H, de telle sorte que le rapport W/H est au moins égal à 0.06, la distance axiale C entre deux sillons circonférentiels 3 consécutifs est au moins égale à 12% et au plus égale à 21% de la largeur axiale W_{T} de la bande de roulement et chacun des sillons circonférentiels 3 axialement les plus extérieurs est positionné axialement, par rapport au plan équatorial XZ, à une distance axiale L_{E} au moins égale à 35% de la largeur axiale W_{T} de la bande de roulement.

La figure 1B est une coupe méridienne, dans un plan méridien YZ, d'une bande de roulement 2 d'un pneumatique 1 selon l'invention. Cette figure 1B représente en particulier les sillons circonférentiels 3 en coupe méridienne, soit 5 sillons circonférentiels dans le cas présenté. De façon générale un sillon circonférentiel 3 s'étend axialement entre deux faces sensiblement circonférentielles (3A, 3B), radialement vers l'intérieur à partir de la surface de roulement 21 jusqu'à une face de fond 3C et circonférentiellement sur toute la circonférence du pneumatique. Un sillon circonférentiel 3, axialement positionné par rapport au plan équatorial à une distance axiale L, a une largeur axiale W, mesurée entre les deux faces sensiblement circonférentielles (3A, 3B), et une profondeur radiale H, mesurée entre la surface de roulement 21 et la face de fond 3C. La profondeur radiale H d'un sillon circonférentiel 3 est au moins égale à 70% et au plus égale à 100% de l'épaisseur radiale H_{T}. L'épaisseur radiale H_{T} de la bande de roulement 2 est définie comme la profondeur radiale maximale mesurée dans les découpures, c'est-à-dire, dans le cas présent, entre la surface de roulement 21 et la face de fond 3C du sillon circonférentiel 3 le plus axialement extérieur qui est ici la découpure la plus profonde. L'épaisseur radiale H_{T} est au moins égale à 70 mm.

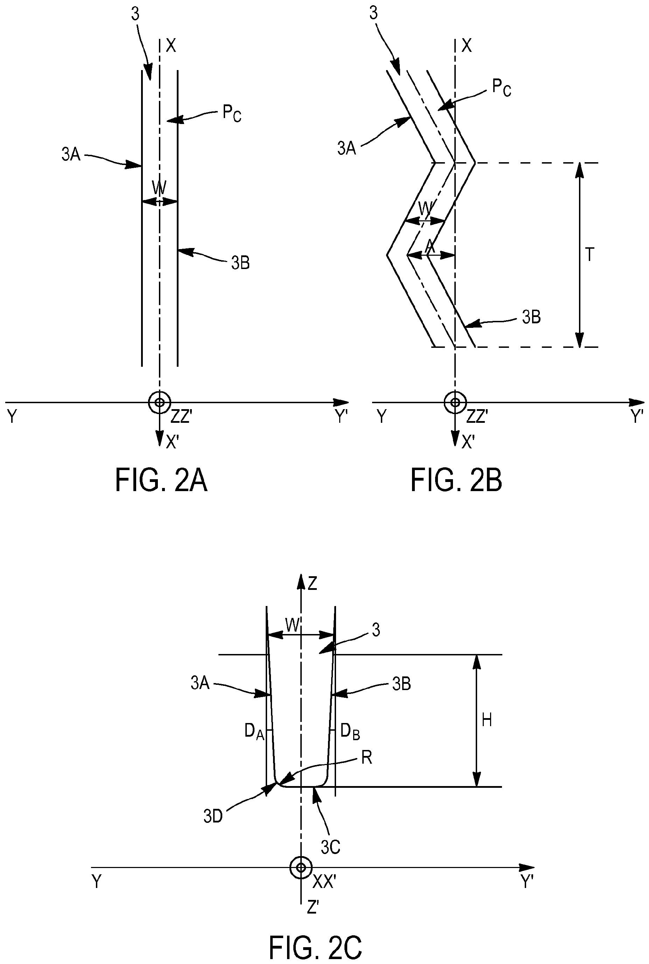

La figure 2A représente une vue de dessus d'un sillon circonférentiel 3, ayant une largeur axiale W, mesurée entre les deux faces sensiblement circonférentielles (3A, 3B), et ayant un profil moyen circonférentiel P_{C} rectiligne, selon une première variante de profil moyen circonférentiel. La figure 2B représente une vue de dessus d'un sillon circonférentiel 3, ayant une largeur axiale W, mesurée entre les deux faces sensiblement circonférentielles (3A, 3B), et ayant un profil moyen circonférentiel (P_{C}) ondulé périodique d'amplitude A et de période T, selon une deuxième variante de profil moyen circonférentiel. La figure 2C représente une coupe méridienne, selon un plan (souvent proche d'un plan méridien) normal au plan moyen d'un sillon circonférentiel 3, ayant une largeur axiale W, mesurée entre les deux faces sensiblement circonférentielles (3A, 3B), et une profondeur radiale H, mesurée entre la surface de roulement 21 et la face de fond 3C. En outre, chaque face sensiblement circonférentielle (3A, 3B) du sillon circonférentiel 3 forme, avec la direction radiale ZZ', un angle (DA, DB) au moins égal à 0.5° et au plus égal à 5° et est reliée à la face de fond 3C par un raccordement circulaire (3D) de rayon R au moins égal à 0.25 fois la largeur axiale W.

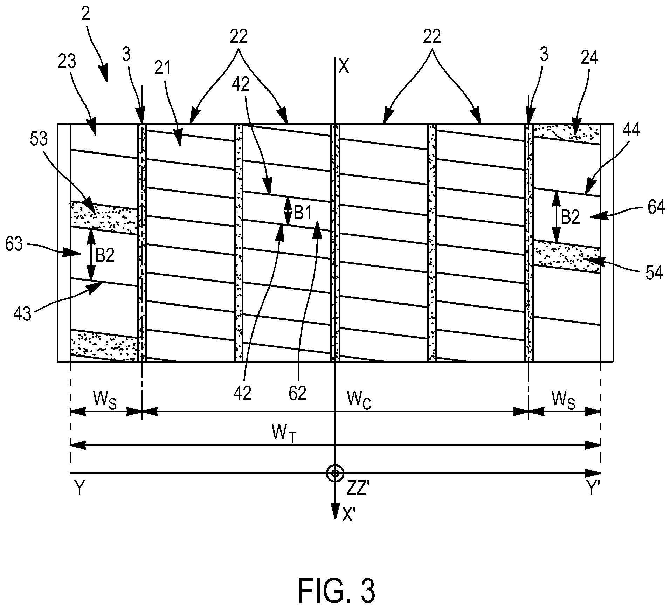

La figure 3 représente un mode de réalisation préféré de l'invention, relatif aux découpures transversales, dans lequel la bande de roulement 2 comprend une portion médiane 22 ayant une largeur axiale W_{C} au moins égale à 50% et au plus égale à 80% de la largeur axiale W_{T}, délimitée axialement par les deux sillons circonférentiels 3 les plus axialement extérieurs, et deux portions latérales (23, 24) axialement positionnées respectivement de part et d'autre de la portion médiane 22 et ayant chacune une largeur axiale W_{S} au moins égale à 10% et au plus égale à 25% de la largeur axiale W_{T}. La bande de roulement 2 est telle que la portion médiane 22 comprend des incisions transversales 42 débouchant dans les sillons circonférentiels 3. Ces incisions transversales 42 ont une profondeur radiale H1 au moins égale à 70% de l'épaisseur radiale H_{T} et délimitent des éléments en relief 62 de hauteur égale à la profondeur radiale H1 desdites incisions transversales et de longueur circonférentielle B1 égale à la distance moyenne entre deux incisions transversales 42 consécutives. Pour tous les éléments en relief 62 délimités par deux incisions transversales 42 consécutives de la portion médiane 22, le rapport H1/B1 est au moins égal à 0.5 et au plus égal à 2.5.

Dans le mode de réalisation représenté sur la figure 3, la bande de roulement 2 est telle que chaque portion latérale (23, 24) comprend des découpures transversales, de type incision transversale (43, 44) et rainure transversale (53, 54), débouchant d'un côté dans un sillon circonférentiel (3) et de l'autre dans une extrémité axiale de la bande de roulement 2. Ces découpures transversales (43, 44 ; 53, 54) ont une profondeur radiale H2 au moins égale à 70% de l'épaisseur radiale H_{T} et délimitent des éléments en relief (63, 64) de hauteur égale à la profondeur radiale H2 desdites découpures transversales et de longueur circonférentielle B2 égale à la distance moyenne entre deux découpures transversales (43, 44 ; 53, 54) consécutives. Pour tous les éléments en relief (63, 64) délimités par deux découpures transversales (43, 44 ; 53, 54) consécutives de chaque portion latérale (23, 24), le rapport H2/B2 est au moins égal à 0.5 et au plus égal à 2.5. Dans la variante de réalisation représentée, chaque portion latérale (23, 24) comprend une alternance d'incisions transversales (43, 44) et de rainures transversales (53, 54) de telle sorte que tout élément en relief (63, 64) est délimité par une incision transversale (43, 44) et une rainure transversale (53, 54) consécutives.

Les inventeurs ont plus particulièrement étudié cette invention pour un pneumatique pour dumper dans les dimensions 40.00R57 et 59/80R63.

Les caractéristiques de bande de roulement pour ces pneumatiques selon l'invention sont présentées dans le tableau 1 ci-dessous :

**Tableau 1**

| **Dimension du pneumatique** | **40.00R57** | **59/80R63** |
|---|---|---|
| Largeur axiale W_{T} (mm) | 1000 | 1200 |
| Epaisseur radiale H_{T} (mm) | 108 | 70 |
| Largeur axiale W (mm) | 8 à 10 | 10 |
| Profondeur radiale H (mm) | 102 à 108 | 70 |
| Rapport W/H | 0.076 à 0.098 | 0.14 |
| Distance axiale C (mm) | 173 | 200 |
| Rapport C/W_{T} | 0.173 | 0.17 |
| Distance axiale L_{E} (mm) | 362 | 440 |
| Rapport L_{E}/W_{T} | 0.36 | 0.37 |

Les gains en températures obtenus, par rapport à un pneumatique de l'état de la technique de la gamme XDR2 Michelin, sont présentés dans le tableau 2 ci-dessous :

**Tableau 2**

| **Dimension du pneumatique** | **40.00R57** | **59/80R63** |
|---|---|---|
| Gain en température au centre de la bande de roulement (°C) | 20°C | 9°C |
| Gain en température aux extrémités axiales de l'armature de travail (°C) | 5°C | 4°C |

## Revendications

1. Pneumatique (1) pour véhicule lourd de type génie civil comprenant une bande de roulement (2), destinée à entrer en contact avec un sol par l'intermédiaire d'une surface de roulement (21) :
- la bande de roulement (2) ayant une largeur axiale W_{T} et ayant une épaisseur radiale H_{T} au moins égale à 70 mm,
- la bande de roulement (2) comprenant au moins deux sillons circonférentiels (3), positionnés axialement de part et d'autre d'un plan équatorial (XZ) passant par le milieu de la bande de roulement et perpendiculaire à l'axe de rotation (YY') du pneumatique,
- chaque sillon circonférentiel (3) s'étendant axialement entre deux faces sensiblement circonférentielles (3A, 3B), radialement vers l'intérieur à partir de la surface de roulement (21) jusqu'à une face de fond (3C) et circonférentiellement sur toute la circonférence du pneumatique,
- chaque sillon circonférentiel (3) étant axialement positionné par rapport au plan équatorial (XZ) à une distance axiale L, ayant une largeur axiale W, mesurée entre les deux faces sensiblement circonférentielles (3A, 3B), et une profondeur radiale H, mesurée entre la surface de roulement (21) et la face de fond (3C), la profondeur radiale H étant au moins égale à 70% de l'épaisseur radiale H_{T} et au plus égale à l'épaisseur radiale H_{T},
**caractérisé en ce que** chaque sillon circonférentiel (3) a une largeur axiale W et une profondeur radiale H, de telle sorte que le rapport W/H est au moins égal à 0.06, **en ce que** la distance axiale C entre deux sillons circonférentiels (3) consécutifs est au moins égale à 12% et au plus égale à 21% de la largeur axiale W_{T} de la bande de roulement **et en ce que** chacun des sillons circonférentiels (3) axialement les plus extérieurs est positionné axialement, par rapport au plan équatorial (XZ), à une distance axiale L_{E} au moins égale à 35% de la largeur axiale W_{T} de la bande de roulement.

2. Pneumatique (1) pour véhicule lourd de type génie civil selon la revendication 1 **dans lequel** le rapport W/H est au plus égal à 0.15.

3. Pneumatique (1) pour véhicule lourd de type génie civil la revendication 1 ou la revendication 2 **dans lequel** la distance axiale L_{E} est au plus égale à 40% de la largeur axiale W_{T} de la bande de roulement.

4. Pneumatique (1) pour véhicule lourd de type génie civil selon l'une quelconque des revendications 1 à 3 **dans lequel** la distance axiale C entre deux sillons circonférentiels (3) consécutifs est au moins égale à 150% et au plus égale à 200% de l'épaisseur radiale H_{T}.

5. Pneumatique (1) pour véhicule lourd de type génie civil selon l'une quelconque des revendications 1 à 4 **dans lequel** au moins un sillon circonférentiel (3) a un profil moyen circonférentiel (P_{C}) rectiligne.

6. Pneumatique (1) pour véhicule lourd de type génie civil selon l'une quelconque des revendications 1 à 4 **dans lequel** au moins un sillon circonférentiel (3) a un profil moyen circonférentiel (P_{C}) ondulé périodique.

7. Pneumatique (1) pour véhicule lourd de type génie civil selon l'une quelconque des revendications 1 à 6 **dans lequel** chaque face sensiblement circonférentielle (3A, 3B) d'un sillon circonférentiel (3) forme, avec la direction radiale (ZZ'), un angle (DA, DB) au moins égal à 0.5° et au plus égal à 5°.

8. Pneumatique (1) pour véhicule lourd de type génie civil selon l'une quelconque des revendications 1 à 7 **dans lequel** chaque face sensiblement circonférentielle (3A, 3B) d'un sillon circonférentiel (3) est reliée à la face de fond (3C) du sillon circonférentiel (3) par un raccordement circulaire (3D) de rayon R au moins égal à 0.25 fois la largeur axiale W.

9. Pneumatique (1) pour véhicule lourd de type génie civil selon l'une quelconque des revendications 1 à 8 **dans lequel** la bande de roulement (2) comprend au moins quatre sillons circonférentiels (3), de préférence au moins cinq sillons circonférentiels (3).

10. Pneumatique (1) pour véhicule lourd de type génie civil selon l'une quelconque des revendications 1 à 9 **dans lequel** la bande de roulement (2) comprend au plus huit sillons circonférentiels (3).

11. Pneumatique (1) pour véhicule lourd de type génie civil selon l'une quelconque des revendications 1 à 10,
- la bande de roulement (2) comprenant une portion médiane (22) ayant une largeur axiale W_{C} au moins égale à 50% et au plus égale à 80% de la largeur axiale W_{T} et deux portions latérales (23, 24) axialement positionnées respectivement de part et d'autre de la portion médiane (22) et ayant chacune une largeur axiale Ws au moins égale à 10% et au plus égale à 25% de la largeur axiale W_{T},
- la bande de roulement (2) étant telle que la portion médiane (22) comprend des incisions transversales (42) débouchant dans les sillons circonférentiels (3),
- ces incisions transversales (42) ayant une profondeur radiale H1 au moins égale à 70% de l'épaisseur radiale H_{T} et délimitant des éléments en relief (62) de hauteur égale à la profondeur radiale H1 desdites incisions transversales et de longueur circonférentielle B1 égale à la distance moyenne entre deux incisions transversales (42) consécutives,
**dans lequel**, pour tous les éléments en relief (62) délimités par deux incisions transversales (42) consécutives de la portion médiane (22), le rapport H1/B1 est au moins à égal 0.5 et au plus égal à 2.5.

12. Pneumatique (1) pour véhicule lourd de type génie civil selon l'une quelconque des revendications 1 à 11,
- la bande de roulement (2) comprenant une portion médiane (22) ayant une largeur axiale W_{C} au moins égale à 50% et au plus égale à 80% de la largeur axiale W_{T} et deux portions latérales (23, 24) axialement positionnées respectivement de part et d'autre de la portion médiane (22) et ayant chacune une largeur axiale Ws au moins égale à 10% et au plus égale à 25% de la largeur axiale W_{T},
- la bande de roulement (2) étant telle qu'au moins une portion latérale (23, 24) comprend des découpures transversales, de type incision transversale (43, 44) ou rainure transversale (53, 54), débouchant d'un côté dans un sillon circonférentiel (3) et de l'autre dans une extrémité axiale de la bande de roulement (2),
- ces découpures transversales (43, 44 ; 53, 54) ayant une profondeur radiale H2 au moins égale à 70% de l'épaisseur radiale H_{T} et délimitant des éléments en relief (63, 64) de hauteur égale à la profondeur radiale H2 desdites découpures transversales et de longueur circonférentielle B2 égale à la distance moyenne entre deux découpures transversales (43, 44 ; 53, 54) consécutives,
**dans lequel**, pour tous les éléments en relief (63, 64) délimités par deux découpures transversales (43, 44 ; 53, 54) consécutives d'au moins une portion latérale (23, 24), le rapport H2/B2 est au moins égal à 0.5 et au plus égal à 2.5.

13. Pneumatique (1) pour véhicule lourd de type génie civil selon la revendication 12, **dans lequel** au moins une portion latérale (23, 24) comprend une alternance d'incisions transversales (43, 44) et de rainures transversales (53, 54) de telle sorte que tout élément en relief (63, 64) est délimité par une incision transversale (43, 44) et une rainure transversale (53, 54) consécutives.

## Patentansprüche

1. Luftreifen (1) für ein Schwerlastfahrzeug von der Art Baufahrzeug, der einen Laufstreifen (2) enthält, der dazu bestimmt ist, mittels einer Lauffläche (21) mit einem Boden in Kontakt zu kommen:
- wobei der Laufstreifen (2) eine axiale Breite W_{T} und eine radiale Dicke H_{T} mindestens gleich 70 mm hat,
- wobei der Laufstreifen (2) mindestens zwei Umfangsrillen (3) enthält, die axial zu beiden Seiten einer Äquatorialebene (XZ) positioniert sind, die durch die Mitte des Laufstreifen verläuft und zur Drehachse (YY') des Luftreifens lotrecht ist,
- wobei jede Umfangsrille (3) sich axial zwischen zwei im Wesentlichen Umfangsseiten (3A, 3B) ausgehend von der Lauffläche (21) radial nach innen bis zu einer Bodenseite (3C) und in Umfangsrichtung über den ganzen Umfang des Luftreifens erstreckt,
- wobei jede Umfangsrille (3) axial bezüglich der Äquatorialebene (XZ) in einem axialen Abstand L positioniert ist, eine axiale Breite W gemessen zwischen den zwei im Wesentlichen Umfangsseiten (3A, 3B) und eine radiale Tiefe H gemessen zwischen der Lauffläche (21) und der Bodenseite (3C) hat, wobei die radiale Tiefe H mindestens gleich 70% der radialen Dicke H_{T} und höchstens gleich der radialen Dicke H_{T} ist,
**dadurch gekennzeichnet, dass** jede Umfangsrille (3) eine axiale Breite W und eine radiale Tiefe H hat, derart, dass das Verhältnis W/H mindestens gleich 0,06 ist, dass der axiale Abstand C zwischen zwei aufeinanderfolgenden Umfangsrillen (3) mindestens gleich 12% und höchstens gleich 21% der axialen Breite W_{T} des Laufstreifens ist, und dass jede der axial am weitesten außen liegenden Umfangsrillen (3) axial bezüglich der Äquatorialebene (XZ) in einem axialen Abstand L_{E} mindestens gleich 35% der axialen Breite W_{T} des Laufstreifens positioniert ist.

2. Luftreifen (1) für ein Schwerlastfahrzeug von der Art Baufahrzeug nach Anspruch 1, wobei das Verhältnis W/H höchstens gleich 0,15 ist.

3. Luftreifen (1) für ein Schwerlastfahrzeug von der Art Baufahrzeug nach Anspruch 1 oder Anspruch 2, wobei der axiale Abstand L_{E} höchstens gleich 40% der axialen Breite W_{T} des Laufstreifens ist.

4. Luftreifen (1) für ein Schwerlastfahrzeug von der Art Baufahrzeug nach einem der Ansprüche 1 bis 3, wobei der axiale Abstand C zwischen zwei aufeinanderfolgenden Umfangsrillen (3) mindestens gleich 150% und höchstens gleich 200% der radialen Dicke H_{T} ist.

5. Luftreifen (1) für ein Schwerlastfahrzeug von der Art Baufahrzeug nach einem der Ansprüche 1 bis 4, wobei mindestens eine Umfangsrille (3) ein geradliniges mittleres Umfangsprofil (P_{C}) hat.

6. Luftreifen (1) für ein Schwerlastfahrzeug von der Art Baufahrzeug nach einem der Ansprüche 1 bis 4, wobei mindestens eine Umfangsrille (3) ein periodisches gewelltes mittleres Umfangsprofil (P_{C}) hat.

7. Luftreifen (1) für ein Schwerlastfahrzeug von der Art Baufahrzeug nach einem der Ansprüche 1 bis 6, wobei jede im Wesentlichen Umfangsseite (3A, 3B) einer Umfangsrille (3) mit der radialen Richtung (ZZ') einen Winkel (DA, DB) mindestens gleich 0,5° und höchstens gleich 5° bildet.

8. Luftreifen (1) für ein Schwerlastfahrzeug von der Art Baufahrzeug nach einem der Ansprüche 1 bis 7, wobei jede im Wesentlichen Umfangsseite (3A, 3B) einer Umfangsrille (3) mit der Bodenseite (3C) der Umfangsrille (3) durch einen kreisförmigen Anschluss (3D) mit einem Radius R mindestens gleich dem 0,25-Fachen der axialen Breite W verbunden ist.

9. Luftreifen (1) für ein Schwerlastfahrzeug von der Art Baufahrzeug nach einem der Ansprüche 1 bis 8, wobei der Laufstreifen (2) mindestens vier Umfangsrillen (3), vorzugsweise mindestens fünf Umfangsrillen (3) enthält.

10. Luftreifen (1) für ein Schwerlastfahrzeug von der Art Baufahrzeug nach einem der Ansprüche 1 bis 9, wobei der Laufstreifen (2) höchstens acht Umfangsrillen (3) enthält.

11. Luftreifen (1) für ein Schwerlastfahrzeug von der Art Baufahrzeug nach einem der Ansprüche 1 bis 10,
- wobei der Laufstreifen (2) einen Mittelabschnitt (22) mit einer axialen Breite W_{C} mindestens gleich 50% und höchstens gleich 80% der axialen Breite W_{T} und zwei Seitenabschnitte (23, 24) enthält, die axial je zu beiden Seiten des Mittelabschnitts (22) positioniert sind und je eine axiale Breite W_{S} mindestens gleich 10% und höchstens gleich 25% der axialen Breite W_{T} haben,
- wobei der Laufstreifen (2) so ist, dass der Mittelabschnitt (22) Quereinschnitte (42) enthält, die in die Umfangsrillen (3) münden,
- wobei diese Quereinschnitte (42) eine radiale Tiefe H1 mindestens gleich 70% der radialen Dicke H_{T} haben und Reliefelemente (62) einer Höhe gleich der radialen Tiefe H1 der Quereinschnitte und einer Umfangslänge B1 gleich dem mittleren Abstand zwischen zwei aufeinanderfolgenden Quereinschnitten (42) begrenzen,
wobei für alle von zwei aufeinanderfolgenden Quereinschnitten (42) des Mittelabschnitts (22) begrenzte Reliefelemente (62) das Verhältnis H1/B1 mindestens gleich 0,5 und höchstens gleich 2,5 ist.

12. Luftreifen (1) für ein Schwerlastfahrzeug von der Art Baufahrzeug nach einem der Ansprüche 1 bis 11,
- wobei der Laufstreifen (2) einen Mittelabschnitt (22) mit einer axialen Breite W_{C} mindestens gleich 50% und höchstens gleich 80% der axialen Breite W_{T} und zwei Seitenabschnitte (23, 24) enthält, die axial zu beiden Seiten des Mittelabschnitts (22) positioniert sind und je eine axiale Breite W_{S} mindestens gleich 10% und höchstens gleich 25% der axialen Breite W_{T} haben,
- wobei der Laufstreifen (2) so ist, dass mindestens ein Seitenabschnitt (23, 24) Querausschnitte von der Art Quereinschnitt (43, 44) oder Querrille (53, 54) enthält, die einerseits in einer Umfangsrille (3) und andererseits in einem axialen Ende des Laufstreifens (2) münden,
- wobei diese Querausschnitte (43, 44; 53, 54) eine radiale Tiefe H2 mindestens gleich 70% der radialen Dicke H_{T} haben und Reliefelemente (63, 64) einer Höhe gleich der radialen Tiefe H2 der Querausschnitte und einer Umfangslänge B2 gleich dem mittleren Abstand zwischen zwei aufeinanderfolgenden Querausschnitten (43, 44; 53, 54) begrenzen,
wobei für alle von zwei aufeinanderfolgenden Querausschnitten (43, 44; 53, 54) mindestens eines Seitenabschnitts (23, 24) begrenzte Reliefelemente (63, 64) das Verhältnis H2/B2 mindestens gleich 0,5 und höchstens gleich 2,5 ist.

13. Luftreifen (1) für ein Schwerlastfahrzeug von der Art Baufahrzeug nach Anspruch 12, wobei mindestens ein Seitenabschnitt (23, 24) eine Wechselfolge von Quereinschnitten (43, 44) und von Querrillen (53, 54) enthält, so dass jedes Reliefelement (63, 64) von einem Quereinschnitt (43, 44) und einer Querrille (53, 54) begrenzt wird, die aufeinander folgen.

## Claims

1. Tyre (1) for a heavy-duty vehicle of civil engineering type comprising a tread (2), intended to come into contact with the ground via a tread surface (21):
- the tread (2) having an axial width W_{T} and a radial thickness H_{T} at least equal to 70 mm,
- the tread (2) comprising at least two circumferential grooves (3), positioned axially one on each side of an equatorial plane (XZ) passing through the middle of the tread and perpendicular to the axis of rotation (YY') of the tyre,
- each circumferential groove (3) extending axially between two substantially circumferential faces (3A, 3B), radially towards the inside from the tread surface (21) as far as a bottom face (3C) and circumferentially around the entire circumference of the tyre,
- each circumferential groove (3) being axially positioned with respect to the equatorial plane (XZ) at an axial distance L, having an axial width W, measured between the two substantially circumferential faces (3A, 3B), and a radial depth H, measured between the tread surface (21) and the bottom face (3C), the radial depth H being at least equal to 70% of the radial thickness H_{T} and at most equal to the radial thickness H_{T},
**characterized in that** each circumferential groove (3) has an axial width W and a radial depth H, such that the ratio W/H is at least equal to 0.06, **in that** the axial distance C between two consecutive circumferential grooves (3) is at least equal to 12% and at most equal to 21% of the axial width W_{T} of the tread, **and in that** each of the axially outermost circumferential grooves (3) is positioned axially, with respect to the equatorial plane (XZ), at an axial distance L_{E} at least equal to 35% of the axial width W_{T} of the tread.

2. Tyre (1) for a heavy-duty vehicle of civil engineering type according to Claim 1, **in which** the ratio W/H is at most equal to 0.15.

3. Tyre (1) for a heavy-duty vehicle of civil engineering type according to Claim 1 or Claim 2, **in which** the axial distance L_{E} is at most equal to 40% of the axial width W_{T} of the tread.

4. Tyre (1) for a heavy-duty vehicle of civil engineering type according to any one of Claims 1 to 3, **in which** the axial distance C between two consecutive circumferential grooves (3) is at least equal to 150% and at most equal to 200% of the radial thickness H_{T}.

5. Tyre (1) for a heavy-duty vehicle of civil engineering type according to any one of Claims 1 to 4, **in which** at least one circumferential groove (3) has a rectilinear circumferential mean profile (P_{C}).

6. Tyre (1) for a heavy-duty vehicle of civil engineering type according to any one of Claims 1 to 4, **in which** at least one circumferential groove (3) has a periodic wavy circumferential mean profile (P_{C}).

7. Tyre (1) for a heavy-duty vehicle of civil engineering type according to any one of Claims 1 to 6, **in which** each substantially circumferential face (3A, 3B) of a circumferential groove (3) forms, with the radial direction (ZZ'), an angle (DA, DB) at least equal to 0.5° and at most equal to 5°.

8. Tyre (1) for a heavy-duty vehicle of civil engineering type according to any one of Claims 1 to 7, **in which** each substantially circumferential face (3A, 3B) of a circumferential groove (3) is connected to the bottom face (3C) of the circumferential groove (3) by a circular fillet (3D) of fillet radius R at least equal to 0.25 times the axial width W.

9. Tyre (1) for a heavy-duty vehicle of civil engineering type according to any one of Claims 1 to 8, **in which** the tread (2) comprises at least four circumferential grooves (3), preferably at least five circumferential grooves (3).

10. Tyre (1) for a heavy-duty vehicle of civil engineering type according to any one of Claims 1 to 9, **in which** the tread (2) comprises at most eight circumferential grooves (3).

11. Tyre (1) for a heavy-duty vehicle of civil engineering type according to any one of Claims 1 to 10,
- the tread (2) comprising a middle part (22) having an axial width W_{C} at least equal to 50% and at most equal to 80% of the axial width W_{T}, and two lateral portions (23, 24), respectively positioned axially on either side of the middle part (22), and each having an axial width Ws at least equal to 10% and at most equal to 25% of the axial width W_{T},
- the tread (2) being such that the middle portion (22) comprises transverse sipes (42) opening into the circumferential grooves (3),
- these transverse sipes (42) having a radial depth H1 at least equal to 70% of the radial thickness H_{T} and delimiting elements in relief (62) of a height equal to the radial depth H1 of the said transverse sipes and of circumferential length B1 equal to the mean distance between two consecutive transverse sipes (42),
**in which**, for all the elements in relief (62) delimited by two consecutive transverse sipes (42) of the middle portion (22), the ratio H1/B1 is at least equal to 0.5 and at most equal to 2.5.

12. Tyre (1) for a heavy-duty vehicle of civil engineering type according to any one of Claims 1 to 11,
- the tread (2) comprising a middle part (22) having an axial width W_{C} at least equal to 50% and at most equal to 80% of the axial width W_{T}, and two lateral portions (23, 24), respectively positioned axially on either side of the middle part (22), and each having an axial width W_{S} at least equal to 10% and at most equal to 25% of the total axial W_{T},
- the tread (2) being such that at least a lateral portion (23, 24) comprises transverse cuts, of transverse sipe (43, 44) or transverse groove (53, 54) type, opening on one side into a circumferential groove (3) and on the other side into an axial end of the tread (2),
- these transverse cuts (43, 44; 53, 54) having a radial depth H2 at least equal to 70% of the radial thickness H_{T} and delimiting elements in relief (63, 64) of a height equal to the radial depth H2 of the said transverse cuts and of circumferential length B2 equal to the mean distance between two consecutive transverse cuts (43, 44; 53, 54),
**in which**, for all the elements in relief (63, 64) delimited by two consecutive transverse cuts (43, 44; 53, 54) of at least one lateral portion (23, 24), the ratio H2/B2 is at least equal to 0.5 and at most equal to 2.5.

13. Tyre (1) for a heavy-duty vehicle of civil engineering type according to Claim 12, **in which** at least one lateral portion (23, 24) comprises an alternation of transverse sipes (43, 44) and of transverse grooves (53, 54) such that any element in relief (63, 64) is delimited by a transverse sipe (43, 44) and a transverse groove (53, 54) which are consecutive.
